# EUROPEAN PATENT APPLICATION

(11) **EP 2 151 981 A1**
(43) Date of publication of application: **10.02.2010**
(21) Application number: 08870744.3
(22) Date of filing: 26.12.2008
(51) Int. Cl.: H04M 3/42, H04W 88/16, G06Q 20/00

(54) **METHOD, SYSTEM AND APPARATUS FOR IMPLANTING ADVERTISEMENT**

(30) Priority: 29.12.2007 CN 200710125727
(71) Applicant: Huawei Technologies Co., Ltd., Longgang District Shenzhen Guangdong 518129 (CN)
(72) Inventor: ZHAN, Jinjing, Longgang-District Shenzhen, 518129 (CN); WANG, Fangshan, Longgang-District Shenzhen, 518129 (CN); FANG, Qi, Longgang-District Shenzhen, 518129 (CN); ZHONG, Jieping, Longgang-District Shenzhen, 518129 (CN); YANG, Zanfeng, Longgang-District Shenzhen, 518129 (CN)
(74) Representative: Kreuz, Georg Maria
(86) International application number: PCT/CN2008/073797
(87) International publication number: WO 2009/089750

(57) **Abstract**

A method for inserting advertisements includes: judging whether the page returned by the SP/CP server is suitable for inserting an advertisement; obtaining the advertisement match-and-select parameter of the page if the page is suitable for inserting the advertisement; obtaining the advertisement to be inserted according to the advertisement match-and-select parameter; and inserting the advertisement into the page. A system, a gateway, and an advertisement platform for inserting advertisements are also disclosed herein to provide individualized advertisements for users, improve the precision of launching advertisements and enhance the user experience.

## Description

This application claims priority to Chinese Patent Application No. 200710125727.2, filed with the Chinese Patent Office on December 29, 2007 and entitled "Method, System, and Apparatus for Inserting Advertisements", which is hereby incorporated by reference in its entirety.

### FIELD OF THE INVENTION

The present invention relates to communication technologies, and in particular, to a method, a system, and an apparatus for inserting advertisements.

### BACKGROUND

With the emergence of the Third Generation (3G) mobile communication, more and more users access the Internet through a mobile terminal. Therefore, the advertisements launched on a wireless network should cover wider. Because a mobile phone is generally proprietary, the users of mobile phones can be easily itemized, individualized advertisement services can be provided for the users conveniently, and the advertisements can be recommended more precisely.

In a wireless system, a mobile terminal is connected with the Internet through a wireless gateway. The wireless gateway is capable of protocol conversion, content adaptation, service control, charging and so on. A mobile terminal may be any apparatus for communicating with the outside, for example, a mobile station in a cellular network, or a computer terminal which communicates with the wireless network through a cellular mobile station. An Internet server is a Content Provider (CP) server or a Service Provider (SP) server.

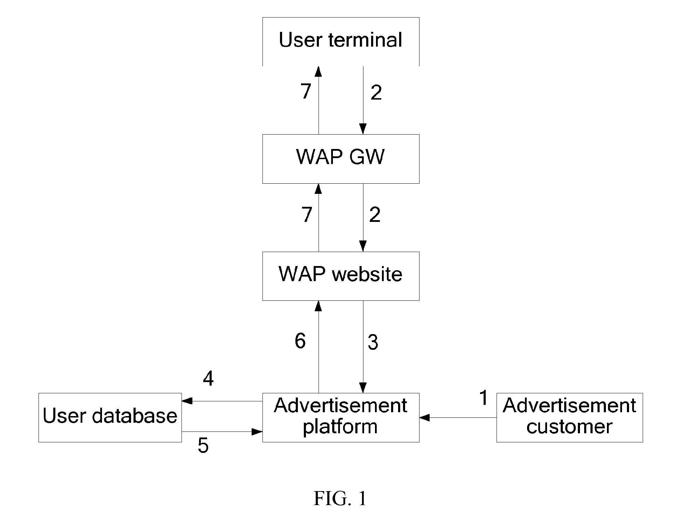

In the prior art, an SP/CP server adds an advertisement into the page accessed by the mobile terminal. For example, an advertisement is added into a page through a Wireless Application Protocol (WAP) website (eg: SP/CP server). As shown in FIG. 1, the advertisement platform is located on the WAP website, and the advertisement release includes the following steps:
Step 1: The advertisement customer purchases advertisements and launches the advertisements on the advertisement platform.
Step 2: The user terminal accesses the WAP website through a WAP gateway (GW), and requests the accessed page contents from the WAP website.
Step 3: The WAP website receives the request of the user terminal, and transmits the user information to the advertisement platform.
Step 4: The advertisement platform queries the user's attribute information (including the user's characteristics and hobbies) in the user database through the unique ID of the user.
Step 5: The advertisement platform selects the most matching advertisement from the advertisement library according to the user attributes.
Step 6: The advertisement platform sends the advertisement code to the WAP website.
Step 7: The WAP website adds the received advertisement code into the page requested by the user terminal, and returns the advertisement code to the terminal through the WAP GW. The terminal displays the received page in which the advertisement is added. The user sees the advertisement while browsing the WAP page.

However, the following defects have become apparent in the prior art:

In the prior art, the WAP website (e.g. SP/CP server) obtains attribute information of only part of the users, for example, only the attribute information registered on the WAP website. Besides, each WAP website provides advertisements of only the local advertisement platform, and it is difficult to provide individualized advertisements for all users.

### SUMMARY

The present invention provides a method, a system, and an apparatus for inserting advertisements, which can recommend individualized advertisements to users and enhance the precision of recommending advertisements.

A system for inserting advertisements according to a first aspect of the present invention includes:
a wireless gateway, adapted to: receive a browse request of a mobile terminal, forward the request to an SP/CP server, receive the page returned by the SP/CP server, judge whether the page is suitable for inserting advertisements, and obtain the advertisement match-and-select parameter if the page is suitable for inserting advertisements; obtain the advertisement to be inserted from the advertisement platform according to the advertisement match-and-select parameter, insert the advertisement into the page, and send the page with the inserted advertisement to the mobile terminal; and
an advertisement platform, adapted to: receive an advertisement matching request from the wireless gateway, select the advertisement to be inserted according to the advertisement matching request, and return the contents of this advertisement to the wireless gateway.

An advertisement platform according to a second aspect of the present invention includes:
an advertisement storage database, adapted to store all candidate advertisements and the advertisement attribute information; and
an advertisement selecting module, adapted to select an advertisement suitable for the user and the user terminal capabilities from the advertisement storage database according to the matching rate between the advertisement match-and-select parameter and the advertisement attribute information.

A gateway for inserting advertisements according to a third aspect of the present invention includes:
an SP managing module, adapted to: store the information about whether the SP/CP server agrees to insert an advertisement into the sent page, and map the Uniform Resource Locator (URL) of the page to the SP/CP server to judge whether the advertisement can be inserted into the page; and
an advertisement inserting apparatus, connected with the SP managing module, and adapted to: judge whether the page is suitable for inserting advertisements through the SP managing module, obtain the advertisement match-and-select parameter of the page user if the page is suitable for inserting advertisements, obtain the advertisement to be inserted from the advertisement platform according to the advertisement match-and-select parameter, and insert the advertisement into the page.

A method for inserting advertisements according to a fourth aspect of the present invention includes:
judging whether the page returned by the SP/CP server is suitable for inserting the advertisement;
obtaining the advertisement match-and-select parameter of the page if the page is suitable for inserting the advertisement;
obtaining the advertisement to be inserted according to the advertisement match-and-select parameter; and
inserting the advertisement into the page.

Compared with the prior art, the present invention has the following benefits:

In the present invention, the advertisement is selected according to multiple parameters such as the user terminal capability information, page content attribute information, user attribute information, and the count of recommending the advertisement to the user. Therefore, individualized advertisements are provided for the user, the advertisement is launched more precisely, and the user experience is enhanced. Moreover, the wireless gateway adds the advertisement into the page, and the advertisement launch is not limited to a website. Therefore, the individualized advertisements can be provided for more users.

### BRIEF DESCRIPTION OF THE DRAWINGS

FIG. 1 shows a process of inserting an advertisement in the prior art;
FIG. 2 shows a system for inserting an advertisement in the first embodiment of the present invention;
FIG. 3 shows an interaction of a mobile terminal, a WAP GW, and an SP/CP server in the first embodiment of the present invention;
FIG. 4 shows a system for inserting an advertisement in the second embodiment of the present invention;
FIG. 5 shows a system for inserting an advertisement in the third embodiment of the present invention;
FIG. 6 is a flowchart of a method for inserting an advertisement in the fourth embodiment of the present invention; and
FIG. 7 shows advertisement inserting in the fourth embodiment of the present invention.

### DETAILED DESCRIPTION

In the embodiments of the present invention, the wireless gateway is located at the service operator and can obtain abundant advertisement match-and-select parameters. For example, the wireless gateway obtains the IDs of all users and the mobile terminal capability information of the user by obtaining the user subscription data, and obtains the page content attribute information by analyzing the user access page. The wireless gateway selects the individualized advertisements suitable for the user according to the advertisement match-and-select parameter, inserts the advertisement into the page, and sends the page to the mobile terminal. The wireless gateway may be a WAP GW, or an enhanced Gateway GPRS Supporting Node (GGSN), or an independent integrated gateway.

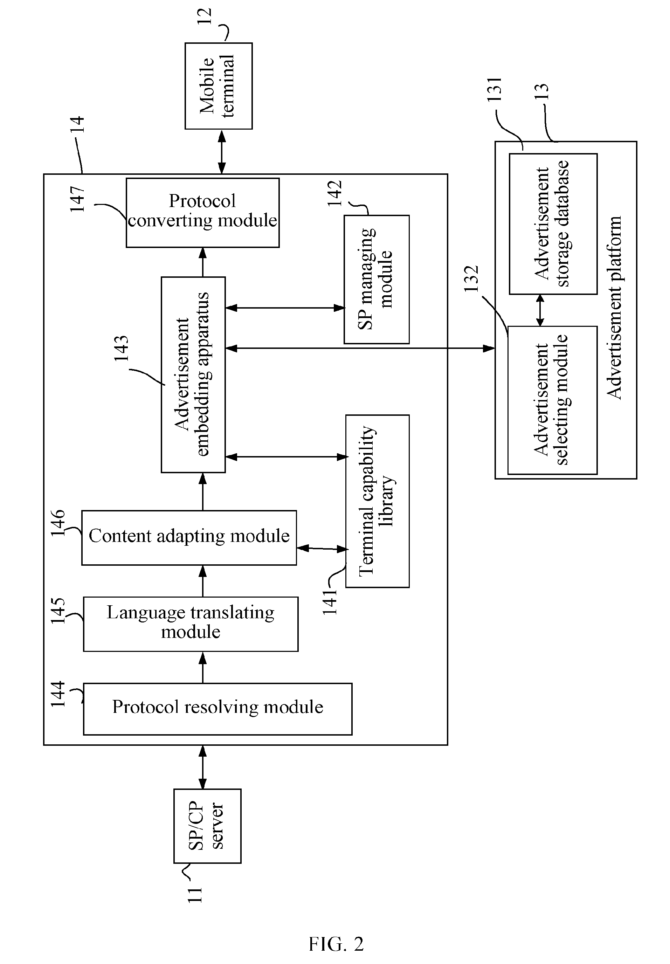

A system for inserting an advertisement is provided in the first embodiment of the present invention. In this system, it is assumed that the wireless gateway is a WAP GW. As shown in FIG. 2, the system includes an SP/CP server 11, a mobile terminal 12, an advertisement platform 13, and a WAP GW 14. The SP/CP server 11 provides contents or services for the user, and sends them to the WAP GW14 in the form of pages. The mobile terminal 12 is a device for the user to access the WAP GW 14.

The advertisement platform 13 is adapted to: store advertisements and select an advertisement, receive the advertisement matching request from the WAP GW 14, select the advertisement to be inserted according to the advertisement matching request, and return the contents of the advertisement to the WAP GW14. The advertisement platform 13 and the WAP GW 14 may be located together in the same physical entity, or separately in different physical entities.

The advertisement platform 13 includes two parts: an advertisement storage database 131, and an advertisement selecting module 132.

The advertisement storage database 131 is adapted to store all advertisements and the advertisement attribute information. Each advertisement is numbered uniquely, and is distinguished from other advertisements through the serial number.

In the embodiments of the present invention, the advertisement attribute information represents the characteristics of the advertisement with respect to content or manifestation, and includes the topic, modality, and size of the advertisement. An advertisement topic reflects the subject matter of the advertisement, for example, Information Technology (IT), real estate, automobile, books and videos, office utilities, education and training, tourism and bodybuilding, and commercial services. An advertisement modality refers to the exterior characteristics or form of the advertisement, for example, banner advertisement, stream media, carousel dialog box, floating icon, and pop-up window. The size of an advertisement may be dimensions of the advertisement. The advertisement storage database 131 records and depicts an advertisement from multiple dimensions, as shown in Table 1:

**Table 1**

| Advertisement No. | Advertisement name | Topic | Modality | File type | Size |
|---|---|---|---|---|---|
| 001 | *** computer | IT product | Banner | JPG | 35 mm * 8 mm |
| 002 | *** mobile station | IT product | Banner | CIF | 25 mm * 8 mm |
| 003 | English | Education and training | Carousel | Text | 30 mm * 5 mm |

The advertisement selecting module 132 is adapted to select an advertisement applicable to the user and the user terminal capabilities for the WAP GW from the advertisement storage database 131 according to the matching between the user terminal capability information and the advertisement attribute information. In the process of selecting an advertisement, the advertisement selecting module 132 is further adapted to obtain the terminal capability information first. The terminal capability information may be obtained from the received advertisement matching request which is sent by the WAP GW 14 to the advertisement platform 13, or may be obtained by querying the terminal capability library 141 according to the terminal model carried in the advertisement matching request.

The terminal capability information is a record of the specifications and characteristics of the terminal, for example, different software and hardware capabilities, supported graphic formats, and supported character sets.

For example, the terminal capabilities of a mobile station are described below in the XML language:

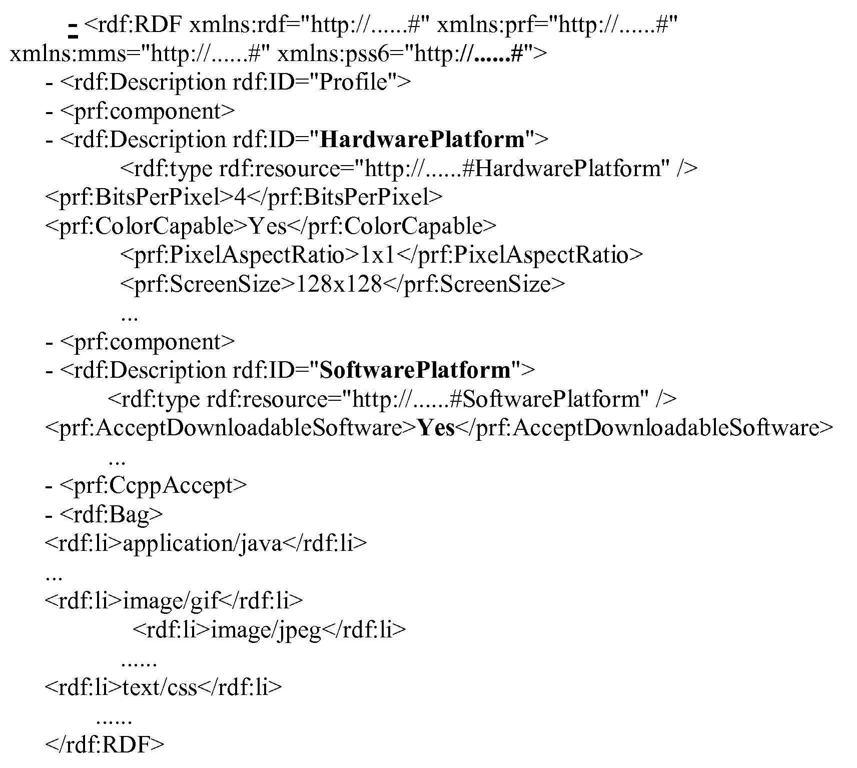

The WAP GW 14 is adapted to: receive the browse request of the mobile terminal 12, convert the request content to the Internet protocol, communicate with each SP/CP server 11 on the Internet, and perform protocol resolution, terminal adaptation, language translation, and protocol conversion for the page after receiving the page returned by the SP/CP server 11. The WAP GW 14 is further adapted to: judge whether the page is suitable for inserting advertisements, and obtain the user terminal capability information if the page is suitable for inserting advertisements, send an advertisement matching request to the advertisement platform 13, insert the advertisement selected by the advertisement platform 13 into the page, and finally, send the processed page to the mobile terminal 12.

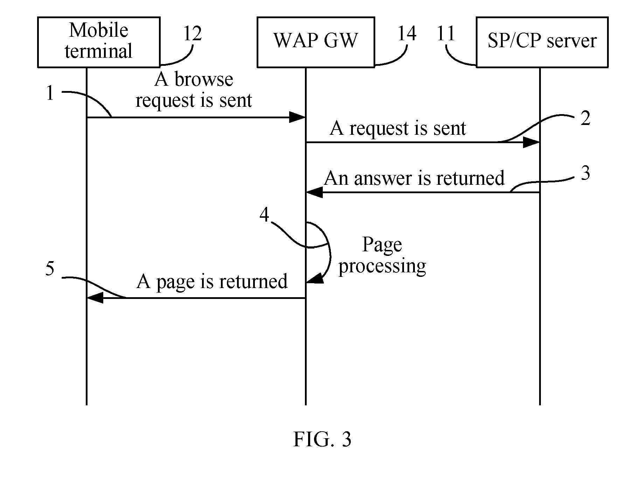

The mobile terminal 12 accesses the SP/CP server 11 through the WAP GW 14, and requests to browse the page. As shown in FIG. 3, the interaction between the mobile terminal 12, the WAP GW 14, and the SP/CP server 11 includes the following steps:
Step 1: The mobile terminal 12 sends a WAP browse request to the WAP GW 14. The request includes the URL of the requested page and the information about the mobile terminal 12, for example, terminal user ID, terminal model, and brief terminal capability information.
Step 2: The WAP GW 14 performs protocol conversion for the URL request sent by the mobile terminal, and sends the request to the SP/CP server 11.
Step 3: The SP/CP server 11 processes the request according to the URL request sent by the WAP GW 14, and returns the contents of the requested page to the WAP GW.
Step 4: The WAP GW 14 receives the page returned by the SP/CP server 11, performs protocol resolution, language translation, content adaptation, protocol conversion, and advertisement inserting for the page, where the language translation, content adaptation and advertisement inserting are not sequence-sensitive.
Step 5: The WAP GW 14 sends the processed page to the mobile terminal.

In order to implement the page processing function in step 4, the WAP GW 14 includes a terminal capability library 141, an SP managing module 142, an advertisement inserting apparatus 143, and the functional modules for protocol resolution, language translation, content adaptation, and protocol conversion.

The terminal capability library 141 is adapted to store the capability information of different terminals according to the terminal model.

The terminal capability information may be obtained in many ways, for example: (1) The user mobile terminal 12 gives the URL of the User Agent Profile (UAProf) file, obtains the terminal capability information and stores it; or (2) The capability information of different terminals is collected, stored, perfected, and maintained manually. When accessing the WAP GW 14, the mobile terminal 12 reports the terminal model and the brief terminal capability information automatically. According to the reported terminal model, more detailed terminal capability information may be found in the terminal capability library 141.

The SP managing module 142 is adapted to: store the information about whether the SP/CP server 11 agrees to insert an advertisement into the sent page, and map the URL of the page to the SP/CP server 11 to judge whether the advertisement can be inserted into the page, as shown in Table 2:

**Table 2**

| URL | sp/cp | Inserting advertisement |
|---|---|---|
| www.huawei.com | Huawei | yes |

The advertisement inserting apparatus 13 is connected with the terminal capability library 141 and the SP managing module 142, and is adapted to: judge whether the page is suitable for inserting advertisements through the SP managing module 142, obtain the advertisement match-and-select parameter if the page is suitable for inserting advertisements, obtain the advertisement to be inserted from the advertisement platform 13 according to the advertisement match-and-select parameter (namely, send an advertisement matching request to the advertisement platform 13, and receive the advertisement returned by the advertisement platform 13), and add the markup language that describes the advertisement into the markup language of the page so as to insert the advertisement into the page.

The protocol resolving module 144 is adapted to perform protocol resolution for the received page, and obtain the URL, script information and content information of the page. The language translating module 145 is adapted to obtain the page content after the protocol resolution, and convert the language of the page into the markup language identifiable to the terminal according to the rule of conversion between the markup languages, for example, convert the page from the Hypertext Markup Language (HTML) to the Wireless Markup Language (WML). The content adapting module 146 is adapted to: obtain the page described in the WML, obtain the terminal capability information from the terminal capability library 141 according to the terminal model, and perform content adaptation for the page, for example, convert the picture type unidentifiable to the terminal into the type identifiable to the terminal, and return the adapted page and the terminal capability information to the advertisement inserting apparatus 143. The protocol converting module 147 performs protocol conversion between the wireless network and the Internet, and converts the processed page into the page based on a wireless network protocol.

Accordingly, the WAP GW 14 receives the page returned by the SP/CP server 11, resolves the data of the page, and then performs language translation, content adaptation, and advertisement inserting for the page, and finally, sends the page to the mobile terminal 12 after protocol conversion. Language translation, content adaptation, and advertisement inserting are not sequence-sensitive. One possible sequence of such operations is: the language translation and the content adaptation are performed first, and then the advertisement is inserted, as detailed below:

The protocol resolving module 144 performs protocol resolution for the received page data, and obtains the URL, script information and content information of the page.

The language translating module 145 obtains the page content after the protocol resolution, and converts the language of the page into the markup language identifiable to the terminal according to the rule of conversion between the markup languages, for example, converts the page from the HTML to the WML.

The content adapting module 146 obtains the page described in the WML, obtains the terminal capability information from the terminal capability library 141 according to the terminal model, and performs content adaptation for the page, for example, converts the picture type unidentifiable to the terminal into the type identifiable to the terminal, and returns the adapted page and the terminal capability information to the advertisement inserting apparatus 143.

The advertisement inserting apparatus 143 obtains the page after the content adaptation, and judges whether the page is suitable for adding an advertisement according to the tag on the page or the URL of the page. If the page is suitable for adding an advertisement, the advertisement inserting apparatus 143 requests the advertisement from the advertisement platform 13, and adds the advertisement code into the markup language description of the page. If no advertisement needs to be added, the process proceeds to the next step.

The protocol converting module 147 performs protocol conversion between the wireless network and the Internet, and converts the processed page into the page based on a wireless network protocol.

The WAP GW 14 sends the page with the added advertisement to the mobile terminal 12.

Another possibility is that, after the page undergoes the protocol resolution, an advertisement is inserted into the page, and then the content is adapted and the language is translated.

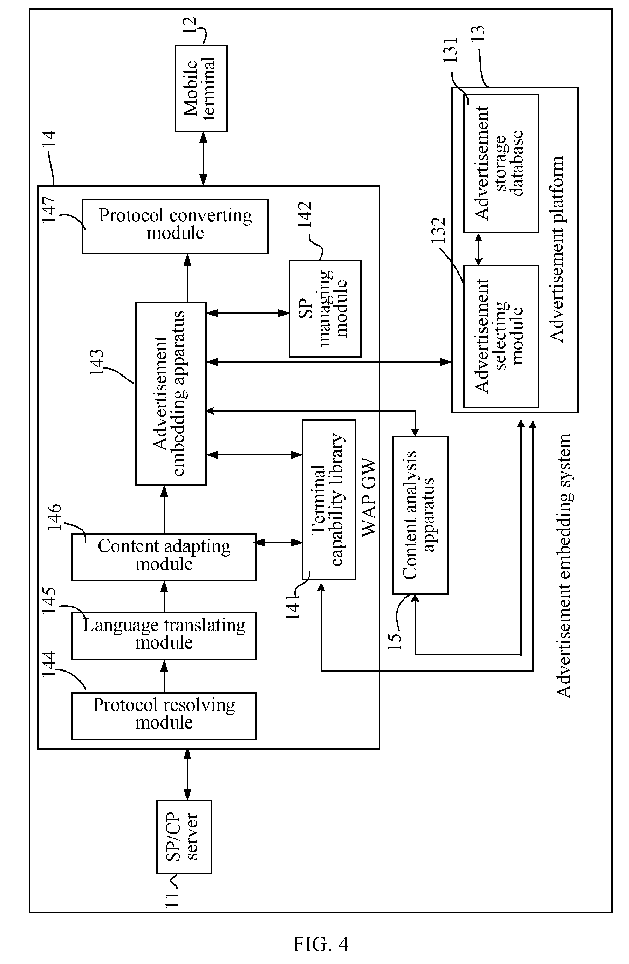

Another system for inserting an advertisement is provided in the second embodiment of the present invention. As shown in FIG. 4, in this embodiment, the WAP GW 14 recommends the advertisement according to the attribute of the page sent by the SP/CP server to the user, and selects the advertisement which is related to the content attribute of the page and suitable for the user terminal capabilities. Compared with the system in the first embodiment, the system in the second embodiment adds a content analysis apparatus 15, and the functions of the advertisement platform are extended.

The content analysis apparatus 15 is adapted to receive the content analysis request from the WAP GW 14, wherein the request includes the resolved page; and then analyze the attribute of the page content, obtain page content attribute information, and return the information to the WAP GW 14. The WAP GW 14 is further adapted to: add the page content attribute information into the matching request which is then sent to the advertisement platform 13. FIG. 4 shows only the logical relation between the content analysis apparatus 15 and the WAP GW 14. Physically, the content analysis apparatus 15 may be independent of the WAP GW 14, or integrated as an internal module into the WAP GW 14.

The page content attribute information may include the topic and the type of the page content, and may be keywords that reflect the topic and the type. The dimensions of the content attribute need to correspond to the advertisement attribute information so that it is convenient to match and select the advertisement. For example, if the page content is: "The first domestically made panel production line was launched, and the national LCD TV breaks through the upstream bottleneck", the content is analyzed through the existing keyword extraction method. As a result of the analysis, the topic related to the content is "IT", and the type is "production".

As against those in the first embodiment, the functions of the advertisement storage database 131 and the advertisement selecting module 132 on the advertisement platform 13 are extended. The advertisement storage database 131 divides the advertisement attribute information into exterior attribute information and inherent attribute information, and stores them. The exterior attribute information describes the terminal capabilities required by the advertisement, for example, advertisement modality, file type, size, and color, and matches the terminal capability information; and the inherent attribute information describes the inherent characteristics manifested by the advertisement, for example, topic, and type, and matches the page content attribute information, as shown in Table 3:

**Table 3**

| Advertisement No. | Advertisement name | Exterior attribute | | | | Inherent attribute | |
|---|---|---|---|---|---|---|---|
| | | Modality | File type | Size | .. | Topic | Type |
| 001 | *** computer | Banner | Picture | 35 mm * 8 mm | .. | IT product | Consumption |
| 002 | *** mobile station | Banner | Picture | 25 mm * 8 mm | .. | IT product | Consumption |
| 003 | English | Carousel | Text | 30 mm * 5 mm | | Education and training | Language |

Accordingly, as an extended function of the advertisement storage database 131, the advertisement selecting module 132 is adapted to: when selecting an advertisement, obtain the terminal capability information and the page content attribute information first, and then match the terminal capability information with the exterior attribute information of the advertisement, match the page content attribute information with the inherent attribute information of the advertisement, and select the advertisement to be inserted. The obtaining of the terminal capability information is similar to that in the first embodiment. The page attribute information is obtained in two modes: The WAP GW 14 requests the content analysis apparatus 15 to analyze the page content, and request an advertisement from the advertisement platform 13 after obtaining the page attribute information, wherein the request carries the page attribute information and the terminal capability information; or, the WAP GW requests an advertisement from the advertisement platform 13 directly, wherein the request carries the terminal capability information and the content of the page, and then the advertisement platform 13 requests the content analysis apparatus 15 to analyze the content.

Other functional modules are similar to those in the first embodiment, and are not repeated here any further.

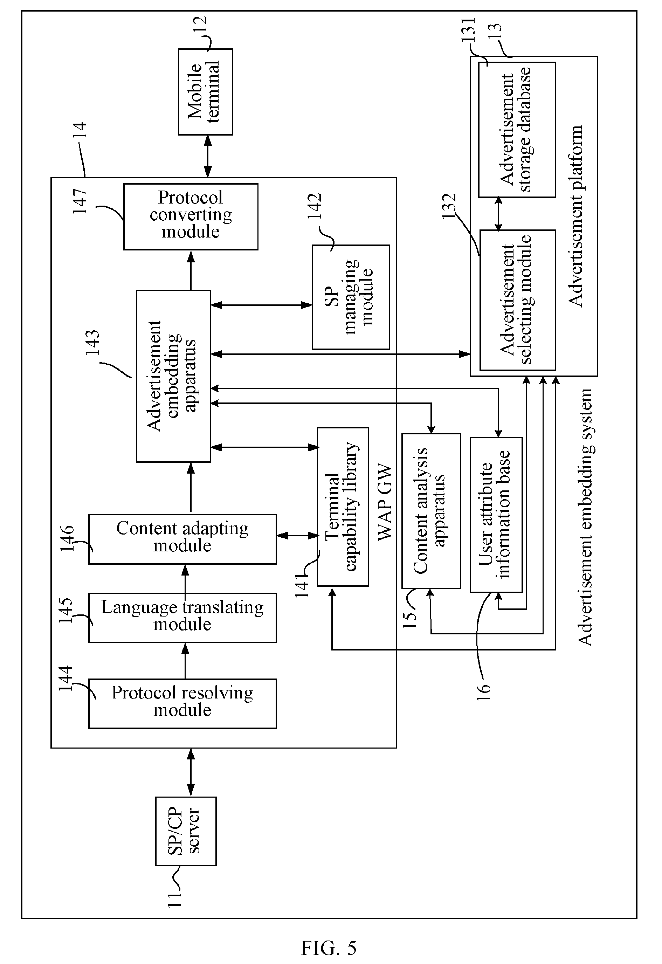

Another system for inserting advertisements is provided in the third embodiment of the present invention. As shown in FIG. 5, the WAP GW 14 recommends an advertisement according to the user attribute, and selects the advertisement which is related to the user attribute and suitable for the user terminal capability. Compared with the system in the first and second embodiments, the system in the third embodiment adds a user attribute information base 16, and the functions of the advertisement platform are extended.

The user attribute information base 16 is adapted to store the user attribute information so that the WAP GW 14 can query the user attribute information according to the unique identifier of the user.

FIG. 5 shows only the logical relation between the user attribute information base 16 and the WAP GW 14. Physically, the user attribute information base 16 may be independent of the WAP GW 14, or integrated as an internal module into the WAP GW 14.

The functions of the advertisement storage database 131 and the advertisement selecting module 132 on the advertisement platform 13 are different from those in the previous embodiments.

The advertisement storage database 131 not only records the exterior characteristics and inherent characteristics of the advertisement, but also records the advertisements that have been recommended to each user and the count of recommending each advertisement to the user (such records are known as user advertisement records), as shown in Table 4:

**Table 4**

| | | | | |
|---|---|---|---|---|
| Advertisement No. | **1 | **2 | ······ | New recommended |
| User identifier | | | | |
| 0123456780 | 3 | 2 | ······ | **7 |

In the foregoing table, the advertisements that have been recommended to the user "0123456780" include: "**1, **2, ......", and the count of recommending the advertisement to the user is "3, 2, ......" respectively. The last item "new recommended" is the latest advertisement recommended by the advertisement platform 13 to the user, and this advertisement has not been retrieved by the WAP GW 14. After the advertisement is sent to the WAP GW 14, this item is null.

The advertisement selecting module 132 is further adapted to: when selecting an advertisement, select a proper advertisement from the advertisement storage database 131 according to the user attribute information and the user advertisement records.

Other functional modules are similar to those in the first embodiment, and are not repeated here any further.

Besides, in the advertisement inserting system, the content analysis apparatus 15 and the user attribute information base 16 may coexist, or may be combined with the system in the first embodiment.

In this embodiment, the WAP GW 14 judges whether the page is suitable for inserting advertisements, obtains the advertisement match-and-select parameter, and selects the advertisement which is suitable for the user terminal capabilities and the user attribute and related to the page, thus increasing the precision of launching advertisements and enhancing the user experience.

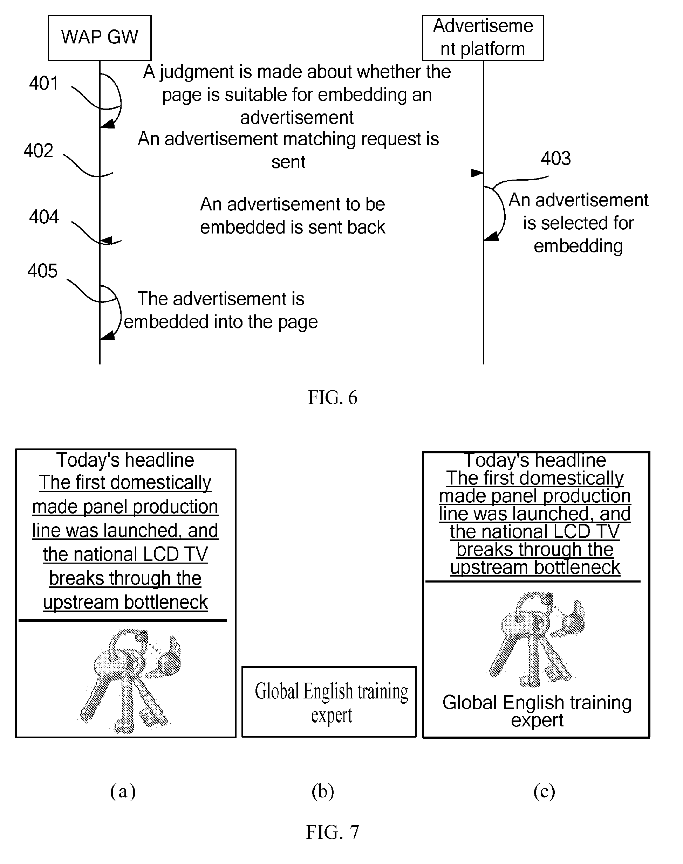

A method for inserting advertisements is provided in the fourth embodiment of the present invention. In this embodiment, the WAP GW receives the page returned by the SP/CP server, performs protocol resolution for the page, and judges whether the page is suitable for inserting advertisements. If the page is suitable for inserting advertisements, the WAP GW requests the advertisement, and adds the corresponding advertisement code into the markup language description of the page. As shown in FIG. 6, the detailed steps are as follows:
Step 401: The access request of the mobile terminal is received, the request is forwarded to the SP/CP server, the page returned by the SP/CP server is received, and a judgment is made about whether the page is suitable for inserting an advertisement.

The details of this step may be: a judgment is made about whether a tag of inserting an advertisement (for example, "<P> advertisement location </P>") exists on the page. If such a tag exists, the page is suitable for inserting an advertisement. If such a tag does not exist, a judgment is made about whether the URL of the page as a result of protocol resolution for the page is included in the list of URLs suitable for inserting an advertisement. If such is the case, the page is suitable for inserting an advertisement. The WAP GW stores the information about whether the SP/CP server agrees to embed an advertisement into the sent page, and may map the URL of the page to the SP/CP server to judge whether the advertisement can be inserted into the page, as shown in Table 5:

**Table 5**

| URL | sp/cp | Inserting advertisement |
|---|---|---|
| www.huawei.com | Huawei | yes |

Step 402: If the page is suitable for inserting an advertisement, an advertisement matching request is sent. The request may carry the advertisement match-and-select parameter.

In this step, the user terminal capability information may be obtained first, and the terminal capability information is carried in the advertisement matching request. When accessing the WAP GW, the mobile terminal reports the terminal model and the brief terminal capability information automatically. The terminal capability information may be found in the terminal capability library according to the terminal model and the brief terminal capability information.

Step 403: The advertisement platform receives the matching advertisement request, matches the advertisement according to the terminal capability information, and selects the advertisement to be inserted.

In this step, the advertisement platform matches the advertisement according to the terminal capability information, and selects the advertisement that can be identified and displayed by the user terminal. The advertisement platform maps the terminal capability information to the advertisement attribute information of the stored advertisements. The advertisement attribute needs to fall within the capability scope of the user terminal. For example, the terminal capability information includes: "screensize", which indicates the screen size of the terminal and requires the length and the width of the advertisement not to exceed the length and the width of the terminal screen; and "software", which raises requirements for the advertisement modality, for example, the terminal's support of pictures, audio and Java decides the acceptable format of the advertisement.

Supposing that the terminal capability file (the terminal capability described in XML language) given in the previous embodiment is applied in this embodiment, the steps of selecting an advertisement that matches the terminal for the user may include the following:
judging whether the length and the width of the advertisement are smaller than the screen size of the terminal; if such is the case, make the next judgment; if such is not the case, terminating the judging of this advertisement and starting to judge the next advertisement; and
judging whether the picture included in the advertisement is the JPEG or GIF type supported by the terminal, and judging whether the text of the advertisement is the CSS type supported by the terminal; if the advertisement meets the requirements of the terminal, adding the advertisement into the matching advertisement set.

The candidate advertisements are selected consecutively according to the foregoing method, and the selected advertisements make up a matching advertisement set. An advertisement in the matching advertisement set is recommended to the user according to certain rules (optional). The rules include that an advertisement is selected according to the time segment, page attribute information, user attribute information, and maximum count of recommending the advertisement to the user, which will be elaborated in the subsequent embodiments.

Besides, in step 402, the advertisement matching request may carry no terminal capability information. After receiving the advertisement matching request, the advertisement platform may query the complete terminal capability information according to the user terminal model or the brief terminal capability information carried in the request.

Step 404: The advertisement platform sends the advertisement to be inserted to the WAP GW.

Step 405: The advertisement is inserted into the page.

Specifically, according to the advertisement location matching policy, the advertisement is inserted into the page accessed by the user, and a new page inclusive of the advertisement is generated. At least two matching policies are applicable to determining the location of the advertisement in a WAP page:
(1) The location for inserting the advertisement is determined according to the advertisement tag in the page script. The location may be an advertisement location specified by the page provider (such as SP/CP server). When the WAP GW sends a browse request to the SP/CP server, the SP/CP server needs to reserve a location for the advertisement in the returned page. The SP/CP server inserts an advertisement tag into the markup language description of the page according to the rules agreed with the WAP GW, and inserts the advertisement into this location according to this tag.
(2) According to the locally set policy, the location for inserting the advertisement is determined. For example, the policy of determining the advertisement inserting location is set according to the advertisement modality and/or page. For example, the location for inserting the advertisement is determined according to the advertisement modality, as shown in Table 6:

**Table 6**

| Advertisement modality | Location |
|---|---|
| Banner | Middle at page head |
| Carousel | Middle at page end |
| Floating icon | Right at page head |
| ... | ... |

Alternatively, the advertisement location is determined according to the page, as shown in Table 7:

**Table 7**

| | | | |
|---|---|---|---|
| | | | |
| | WAP page | Advertisement location | |
| | Text | Middle at page end | |
| | Picture | Right at page head | |
| | Text + picture | Middle at page | |
| | ··· | ··· | |

The easiest way of determining the advertisement location is: All the advertisements are inserted into a fixed location such as page end without considering any other factor.

In the following example about how to add an advertisement into the WAP page, the advertisement is located at the end of the WAP page. If the page subsequent to the WAP GW content adaptation is shown in FIG. 7(a), the page expressed in the HTML language is as follows:

```
           <HTML>
           <HEAD>
               <title>news</title>
           </HEAD>
           <BODY>
              <H1 ALIGN=CENTER>today's headlines</H1>
           <CENTER><P>
           <HR></P></CENTER>
           <P><a href="samp/link.html">The first domestically made panel production line was
      launched   and the national LCD TV breaks through the upstream
      bottleneck</a></P>
           <IMG SRC="a1.gif' HEIGHT=20 WIDTH=20>
           </BODY>
           </HTML>
```

It is assumed that the advertisement selected for the user is "003" (as shown in Table 3), which is a carousel dialog box, as shown in FIG. 7(b). An HTML markup language that describes the advertisement is added after the page markup language in FIG. 7(a), and the advertisement is inserted at the end of the page, namely,

```
           <HTML>
           <HEAD>
               <title>news</title>
           </HEAD>
           <BODY>
              <H1 ALIGN=CENTER>today's headlines</H1>
           <CENTER><P>
           <HR></P></CENTER>
           <P><a href="samp/link.html">The first domestically made panel production line was
      launched   and the national LCD TV breaks through the upstream
      bottleneck</a></P>
           <IMG SRC="a1.gif' HEIGHT=20 WIDTH=20>
           <td><marquee direction="left" behavior="alternate" height="20" scrollamount="2">
      Global English training expert, ** guides you to success! </marquee> </td><!-This is an
      advertisement-->
           </BODY>
           </HTML>
```

Therefore, after the content shown in FIG. 7(b) is inserted into FIG. 7(a), the page is displayed as FIG. 7(c), namely, the page sent to the user. If the page is expressed in the WML language, the method for inserting the advertisement is the same as the foregoing method except the language rules.

In this embodiment, an advertisement suitable for being displayed on the user terminal is selected, and is inserted into the page requested by the user, thus accomplishing advertisement embedment.

Another method for inserting advertisements is provided in the fourth embodiment of the present invention. The difference is that, in step 403 of the fourth embodiment, the advertisement platform uses the page attribute information of the page, into which the advertisement needs to be inserted, as a condition of selecting the advertisement when selecting the advertisement to be inserted.

The WAP GW may request to analyze the page content to obtain the page content attribute information, and the information may be carried in the advertisement matching request sent in step 402. Alternatively, after the advertisement platform receives the advertisement matching request, the advertisement platform requests to analyze the page content to obtain such information. The page content attribute information may include the topic and the type of the page content, and may be keywords that reflect the topic and the type. The dimensions of the content attribute need to correspond to the advertisement attribute information so that it is convenient to select the advertisement of the highest matching rate.

Therefore, the advertisement attribute information of the candidate advertisements may be divided into exterior attribute information and inherent attribute information.

In this way, in step 403, the matching between the advertisement attribute information and the terminal capability is the matching between the exterior attribute of the advertisement and the user terminal capability; and the interior attribute of the advertisement is used to match the page content attribute. The existing matching rate calculation method is applicable, for example, inner product method based on vector space, angle cosine method, and Euclidean distance method. Afterward, the advertisement that meets the matching rate requirement is selected.

First, the advertisements that match the terminal capabilities are selected out first, and, among the selected advertisements, the advertisements that match the page content attribute are selected; or the sequence of selection is reversed; or the advertisements that match the page content attribute are selected and the advertisements that match the terminal capabilities are selected, and the intersection of the two selection results constitutes the desired advertisements.

The most matching advertisements are selected out according to the page content attribute information, and the inner product method is applied to calculate the matching rate.

First, a page vector and an advertisement vector are set up. Each item of the vector is the page content attribute. The content attribute of the page is analyzed. For example, the attribute items of the page in FIG. 7(a) are "topic" and "type", and therefore, the items of the vector are (topic, type). For the vector of this page, the value of each item of the vector is 1, and the corresponding vector is expressed as (1 1). For advertisement vectors, each item of the advertisement attribute information is compared with the page content attribute. The value of the item of the same attribute is "1", and the value of the item of different attributes is set to "0". For example, the "topic" of the advertisement "001" in Table 3 is the same as the page content attribute but the "type" item is different, and therefore, its vector is expressed as (1 0), the vector of advertisement "002" is expressed as (1 0), and the vector of advertisement "003" is expressed as (0 0).

Secondly, inner product calculation is performed for the page vector and the advertisement vector to obtain the matching rate between the advertisement and the page content, namely:
WAP page vector * advertisement vector = matching rate
"001": (11) * (10) = 1
"002": (1 1) * (1 0) = 1
"003": (11) * (00) = 0

Finally, the most matching advertisement is selected, namely, advertisement "001" and advertisement "002", which are selected according to the page content attribute.

Among the two advertisements, the advertisement suitable for the terminal capabilities is selected out.

Moreover, in the steps of this embodiment and the fourth embodiment, the advertisement platform uses the user attribute information of the user as a match-and-select parameter of advertisement when selecting the advertisement to be inserted. The user attribute information may be obtained by the WAP GW according to the unique identifier of the user, and may be carried in the advertisement matching request of the advertisement platform. Alternatively, the advertisement platform obtains the user attribute information according to unique user identifier carried in the advertisement matching request after receiving the request. Accordingly, the advertisement attribute information may include the information that matches the user attribute information. The unique user identifier may be a Mobile Station International ISDN Number (MSISDN) allocated by the service provider to the user, or an International Mobile Subscriber Identifier (IMSI), or a user identifier defined among the WAP GW, the user attribute information base, and the advertisement platform. A unique user identifier corresponds to a user, and serves the purpose of distinguishing between different users.

The user attribute information may include the basic personal identity information, preference information, and context information of the user. The basic personal identity information of the user may include: user gender, age, home area, occupation, and terminal model; the preference information includes the types and topics that interest the user; and the context information may include geographic location information, as shown in Table 8:

**Table 8**

| User identifier | Basic information | | | | | Preference information | | Context information |
|---|---|---|---|---|---|---|---|---|
| | Gender | Age | Home area | Occupation | Type | Topic | Type | Geographic location information |
| **0123456780** | Male | 28 | Shenzhen | Engineer | GoTone | ··· | ··· | ··· |
| **0123456781** | Female | 25 | Shenzhen | Teacher | M-Zone | ··· | ··· | ··· |

The preference information of the user not only records the topics and the types that interest the user, but also records the extent of interesting the user through a weight value. For example, the preference information of the user "0123456781" is shown in Table 9:

**Table 9**

| Preference information | | | |
|---|---|---|---|
| Topic | | Type | |
| Name | Weight | Name | Weight |
| IT | 0.4 | Technology | 0.2 |
| Education and training | 0.9 | Consumption | 0.7 |
| Tourism | 0.6 | Language | 0.7 |

The method of selecting the advertisement that matches the user attribute information is similar to the method of selecting the advertisement that matches the content attribute information. First, the expression of the user attribute vector and the advertisement vector is set up, and the item of the vector is determined according to the user preference. For example, the attribute vector item of the user "0123456781" is (IT, education and training, tourism, technology, consumption, and language), and the corresponding values are (0.4, 0.9, 0.6, 0.2, 0.7, 0.7). Considering the inherent attribute information of the advertisement, if an item in the user attribute vector does not exist in the attribute information in the advertisement, the value of this item in the advertisement vector is 0; otherwise, the value of this item in the advertisement vector is 1, and the vector of advertisement "001" (as shown in Table 3) is expressed as (1, 0, 0, 0, 1, 0), the vector of advertisement "002" is expressed as (1, 0, 0, 0, 1, 0), and the vector of advertisement "003" is expressed as (0, 1, 0, 0, 0, 1). The inner product of the user attribute vector and the advertisement vector is calculated, namely:
User attribute vector * advertisement vector = matching rate
"001" (0.4, 0.9, 0.6, 0.2, 0.7, 0.7) * (1, 0, 0, 0, 1, 0) = 1.1
"002" (0.4, 0.9, 0.6, 0.2, 0.7, 0.7) * (1, 0, 0, 0, 1, 0) = 1.1
"003" (0.4, 0.9, 0.6, 0.2, 0.7, 0.7) * (0, 1, 0, 0, 0, 1) =1.6

The most matching advertisement is selected, namely, advertisement "003", which is selected according to the user attribute information.

Through the foregoing method, the advertisement "003" which most matches the user attribute information is selected. With such a method, it is possible that the advertisement "003" alone is always recommended to the user in a long period. In order to avoid always recommending the same advertisement to a user, the following method may be applied:
(1) The advertisement platform defines a matching rate threshold such as "1" instead of selecting the most matching advertisement only, and selects all the advertisements with the matching rate greater than the threshold "1". The selected advertisements constitute a matching advertisement set which stores the matching advertisements in the order from a higher matching rate to a lower matching rate. Therefore, the matching advertisement set of the user "0123456781" is "003, 002, 001".
(2) The advertisement platform retrieves the advertisements according to the storage order, and judges whether the advertisement has been recommended to the user. First, the advertisement platform judges whether advertisement "003" has been recommended to user "0123456781 ", and searches the user advertisement records of user "0123456781" for the advertisement. If that advertisement is not found, the advertisement platform stores advertisement "003" into the "new recommended" item of the user advertisement records; if that advertisement is found, the process proceeds to the next step.
(3) The advertisement platform judges whether the count of recommending the advertisements is less than the specified threshold. If the defined threshold of recommending the advertisement is 5 and the user advertisement records of user "0123456781" show that advertisement "003" has been recommended for four times, the advertisement platform stores advertisement "003" into the "new recommended" item of the user advertisement records. If advertisement "003" has been recommended for five times, the advertisement platform determines that the advertisement cannot be further recommended. Therefore, the advertisement platform selects the advertisement subsequent to advertisement "003" in the matching advertisement set, namely, "002", and repeats the foregoing steps until a matching advertisement is selected for the user.

In order to relieve impact caused by the advertisement matching process onto the service response time and improve the user access efficiency, the process of matching the advertisement with the user in this embodiment is not necessarily included in the process of the user browsing the service. That is, the advertisement platform may match the advertisement with the user according to the user attribute information and the terminal capability first, and store the selected advertisement into the "new recommended" item of the user advertisement records. When the WAP GW requests an advertisement from the advertisement platform, the WAP GW may obtain the "new recommended" item in the user advertisement records according to the user identifier, and add the item into the page.

The advertisement platform matches the advertisement with the user in the following two scenarios:
A. When the "new recommended" item corresponding to the user is null, the advertisement platform may send a request to the user attribute information base to obtain the user attribute information. The request carries the unique identifier of the user. The advertisement platform selects the proper advertisement according to the user attribute information, and stores the advertisement number into the "new recommended" item of the user.
B. After a fixed time period expires, the advertisement platform may recommend a new advertisement to the user proactively to avoid that: The value of the "new recommended" item is still the advertisement recommended before the period but the user attribute information or the advertisement data has changed. This time period is the time length defined by the system, and may be expressed by hour, day, or month, and starts from the time determined by the "new recommended" value of the user. If the WAP GW fails to retrieve the advertisement before expiry of that time period, the advertisement platform needs to recommend an advertisement for the user again.

In this way, the advertisement is selected beforehand according to the advertisements that have been recommended to the user and the count of recommending each advertisement to the user, thus improving timeliness and efficiency of selecting the advertisement.

To sum up, in the embodiments of the present invention, the advertisement is selected according to multiple parameters such as user terminal capability information, page content attribute information, user attribute information, and the count of recommending the advertisement to the user. Therefore, individualized advertisements are provided for the user, the advertisement is launched more precisely, and the user experience is enhanced. Moreover, the wireless gateway adds the advertisement into the page, and the advertisement launch is not limited to a website. Therefore, the individualized advertisements can be provided for more users.

After reading the foregoing embodiments, those skilled in the art are clearly aware that the present invention may be implemented through hardware, or through software in addition to a necessary universal hardware platform. Therefore, the technical solution under the present invention may be embodied as a software product. The software product may be stored in a non-volatile storage medium (such as CD-ROM, USB flash disk, or mobile hard disk), and may include several instructions that enable a computer device (such as personal computer, server, or network device) to perform the methods provided in the embodiments of the present invention.

Although the invention has been described through several preferred embodiments, the invention is not limited to such embodiments. It is apparent that those skilled in the art can make modifications and variations to the invention without departing from the spirit and scope of the invention. The invention is intended to cover the modifications and variations provided that they fall in the scope of protection defined by the following claims or their equivalents.

## Claims

1. A system for inserting advertisements, comprising:
a wireless gateway, adapted to: receive a browse request of a mobile terminal, forward the request to an SP/CP server, receive a page returned by the SP/CP server, determine whether the page is suitable for inserting advertisements, and obtain an advertisement to be inserted from the advertisement platform according to an advertisement match-and-select parameter, insert the advertisement into the page, and send the page with the inserted advertisement to the mobile terminal; and
an advertisement platform, adapted to: receive an advertisement matching request from the wireless gateway, select the advertisement to be inserted according to the advertisement matching request, and return the contents of the advertisement to the wireless gateway.

2. The system of claim 1, further comprising:
a content analysis apparatus, adapted to: receive a content analysis request of the page from the wireless gateway, analyze attributes of the page content according to the content analysis request, obtain page content attribute information, and return the page content attribute information to the wireless gateway;
wherein the advertisement match-and-select parameter comprises the page content attribute information obtained from the page, the content analysis request of the page from the wireless gateway to the content analysis apparatus, and the page content attribute information returned by the content analysis apparatus.

3. The system of claim 1, further comprising:
a user attribute information base, adapted to store the user attribute information;
wherein the advertisement match-and-select parameter comprises the user attribute information queried from the user attribute information base, and the user attribute information queried by the wireless gateway from the user attribute information base.

4. An advertisement platform, comprising: an advertisement storage database and an advertisement selecting module; wherein,
the advertisement storage database is adapted to store all candidate advertisements and the advertisement attribute information; and
the advertisement selecting module is adapted to select an advertisement suitable for the user and the user terminal capabilities from the advertisement storage database according to the 22 matching rate between the advertisement match-and-select parameter and the advertisement attribute information.

5. The advertisement platform of claim 4, wherein the advertisement storage database is further adapted to: store respectively the advertisement attribute information in the form of exterior attribute information and inherent attribute information; wherein the exterior attribute information is adapted to match the terminal capability information in the advertisement match-and-select parameter, and the inherent attribute information is adapted to match the page content attribute information in the advertisement match-and-select parameter.

6. A gateway for inserting advertisements, comprising:
an SP managing module, adapted to: store the information about whether the SP/CP server agrees to insert an advertisement into the sent page, and map the Uniform Resource Locator, URL, of the page to the SP/CP server to determine whether the advertisement can be inserted into the page; and
an advertisement inserting apparatus, connected with the SP managing module, and adapted to: judge whether the page is suitable for inserting advertisements through the SP managing module, obtain the advertisement match-and-select parameter of the page user if the page is suitable for inserting advertisements, obtain the advertisement to be inserted from the advertisement platform according to the advertisement match-and-select parameter, and insert the advertisement into the page.

7. The gateway of claim 6, further comprising: a terminal capability library, adapted to store the capability information of different terminals according to the terminal model, wherein the advertisement inserting apparatus is connected to the terminal capability library, and adapted to obtain the terminal capability information of the page user from the terminal capability library.

8. The gateway of claim 6, further comprising: a content analysis apparatus, adapted to: analyze attributes of the page content, and obtain page content attribute information, wherein the advertisement inserting apparatus is connected to the content analysis apparatus and adapted to obtain the advertisement to be inserted from the advertisement platform according to the terminal capability information and the page content attribute information.

9. The gateway of any one of claims 6, 7 and 8, further comprising: a user attribute information base, adapted to: store the user attribute information, wherein the advertisement inserting apparatus is connected to the user attribute information base and adapted to obtain the advertisement to be inserted according to the user attribute information.

10. A method for inserting advertisements, comprising:
determining whether the page returned by the SP/CP server is suitable for inserting the advertisement;
obtaining the advertisement match-and-select parameter of the page if the page is suitable for inserting the advertisement;
obtaining the advertisement to be inserted according to an advertisement match-and-select parameter; and
inserting the advertisement into the page.

11. The method of claim 10, wherein, before the judging whether the page returned by the SP/CP server is suitable for inserting the advertisement, the method comprises:
receiving an access request of a mobile terminal, and
forwarding the access request of the mobile terminal to the SP/CP server.

12. The method of claim 10, wherein, after the inserting the advertisement into the page, the method comprises:
sending the page inserted the advertisement to the mobile terminal.

13. The method of claim 10, wherein the determining whether the page returned by the SP/CP server is suitable for inserting the advertisement comprises:
determining whether a tag of inserting an advertisement exists on the page; if the tag exists, the page is suitable for inserting an advertisement, or
determining whether the URL of the page belongs to the list of URLs suitable for inserting an advertisement; if the URL of the page belongs to the list, the page is suitable for inserting an advertisement.

14. The method of claim 10, wherein the advertisement match-and-select parameter comprises user terminal capability information;
the obtaining the advertisement to be inserted according to the advertisement match-and-select parameter further comprises: matching the advertisement attribute information of the advertisement to be inserted with the terminal capability information, and selecting the advertisement that can be identified and displayed by the mobile terminal.

15. The method of claim 10, wherein the advertisement match-and-select parameter comprises obtained page content attribute information according to the page,
the obtaining the advertisement to be inserted according to the advertisement match-and-select parameter further comprises: matching the advertisement attribute information of the advertisement to be inserted with the obtained page content attribute information, and selecting the advertisement that can be identified and displayed by the mobile terminal.

16. The method of claim 10, wherein the advertisement match-and-select parameter comprises obtained user attribute information according to the user identifier,
the obtaining the advertisement to be inserted according to the advertisement match-and-select parameter further comprises: matching the advertisement attribute information of the advertisement to be inserted with the user attribute information, and selecting the advertisement that can be identified and displayed by the mobile terminal.

17. The method of any one of claims 10 and 13-16, wherein the obtaining the advertisement to be inserted according to the advertisement match-and-select parameter further comprises: determining whether the count of recommending the advertisement to be inserted is more than a specified threshold; if no, the advertisement is inserted.

18. The method of claim 10, wherein the inserting the advertisement into the page comprises:
inserting the advertisement to be inserted into the page according to the advertisement location matching policy; and
generating a new page inclusive of the advertisement.

19. The method of claim 18, wherein the advertisement location matching policy comprises:
determining the location for inserting the advertisement according to an advertisement tag in the page script; or
determining the location for inserting the advertisement according to a locally set policy.
